# EUROPÄISCHE PATENTSCHRIFT

(11) **EP 1 458 239 B1**
(45) Veröffentlichungstag und Bekanntmachung des Hinweises auf die Patenterteilung: **06.06.2007**
(21) Anmeldenummer: 02779272.0
(22) Anmeldetag: 22.08.2002
(51) Int. Cl.: A01N 59/02, A01N 33/12, A01N 33/08, A01N 33/04

(54) **FUNGIZIDE DESINFEKTIONS- UND KONSERVIERUNGSMITTELZUSAMMENSETZUNGEN**
FUNGICIDAL COMPOSITIONS OF DISINFECTING AND PRESERVING AGENTS
COMPOSITIONS D'AGENTS DESINFECTANTS ET CONSERVATEURS FONGICIDES

(30) Priorität: 31.08.2001 EP 01120978; 08.08.2002 US 401808 P
(43) Veröffentlichungstag der Anmeldung: 22.09.2004
(73) Patentinhaber: Lonza AG, 4052 Basel (CH)
(72) Erfinder: LÜTZELER, Michael, 79639 Grenzach-Wyhlen (DE); LICHTENBERG, Florian, 79639 Grenzach-Wyhlen (DE)
(86) Internationale Anmeldenummer: PCT/EP2002/009383
(87) Internationale Veröffentlichungsnummer: WO 2003/020036

(56) Entgegenhaltungen:
- WO-A-01/00024
- DE-A- 3 639 635
- GB-A- 2 354 771
- US-A- 4 923 899

## Beschreibung

Die Erfindung betrifft synergistische Desinfektions- und Konservierungsmittelzusammensetzungen auf der Basis von Aminen und/oder quartären Ammoniumsalzen.

Amine und/oder quartäre Ammoniumsalze mit Alkyl- und/oder Aralkylseitenketten finden als Wirksubstanzen in zahlreichen Desinfektions- und Konservierungsmittelzusammensetzungen Verwendung. Hierzu zählen beispielsweise *N,N*-Bis(3-aminopropyl)octylamin (WO-A-01/00024), *N,N*-Bis(3-aminopropyl)dodecylamin (EP-A-0 333 143, EP-A-0 343 605) und einfache oder mehrfache (WO-A-90/09405, US 4 923 899) Ammoniumsalze. Die entsprechenden Zusammensetzungen weisen jedoch im allgemeinen, insbesondere bei höheren Verdünnungen, eine unbefriedigende Wirksamkeit gegen Pilze wie z. B. *Aspergillus niger* auf.

Aufgabe der vorliegenden Erfindung war daher die Bereitstellung von Desinfektions- und Konservierungsmittelzusammensetzungen auf der Basis von Aminen und/oder quartären Ammoniumsalzen, welche auch bei hoher Verdünnung eine gute Wirksamkeit gegen Pilze aufweisen und zwar nicht nur im alkalischen Bereich, sondern auch unter neutralen bis sauren pH-Bedingungen.

Erfindungsgemäss wird diese Aufgabe durch die Desinfektionsmittelzusammensetzung nach Anspruch 1 gelöst.

Es wurde überraschend gefunden, dass Amine und oder quartäre Ammoniumsalze der allgemeinen Formel 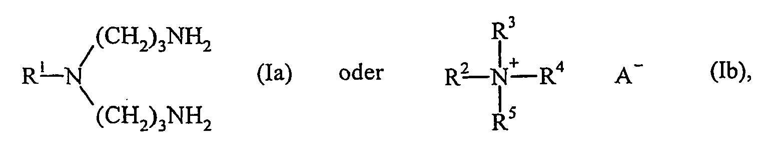 worin
R¹ C₆₋₁₈-Alkyl,
R² Benzyl oder C₆₋₁₈-Alkyl,
R³ C₁₋₁₈-Alkyl oder-[(CH₂)₂-O]*ₙ*-R⁶ mit *n* = 1-20,
R⁶ Wasserstoff oder gegebenenfalls substituiertes Phenyl und
A⁻ ein einwertiges Anion oder ein Äquivalent eines mehrwertigen Anions einer anorganischen oder organischen Säure bedeuten,
durch Zusatz von wenigstens einem Sulfit oder Dithionit der allgemeinen Formel

M₂S₂O₅ (IIb), M₂S₂O₄ (IIc) oder M₂SO₃ (IId),

worin M ein einwertiges Kation oder ein Äquivalent eines mehrwertigen Kations ist, im Massenverhältnis (I:II) von 20:1 bis 1:20
eine gute fungizide Wirksamkeit erhalten.

Unter Alkyl sind hier und im folgenden jeweils lineare oder verzweigte Alkylgruppen der angegebenen Kohlenstoffzahlen zu verstehen, vorzugsweise jedoch lineare Alkylgruppen und besonders bevorzugt solche mit gerader Anzahl von Kohlenstoffatomen. Insbesondere sind hierunter auch die von natürlichen Rohstoffen abgeleiteten Homologengemische wie beispielsweise "Kokosalkyl" zu verstehen.
Unter substituierten Phenylgruppen sind insbesondere mit einer oder mehreren C₁₋₈-Alkylgruppen und/oder Chloratomen substituierte Phenylgruppen zu verstehen.

Als Anion A⁻ eignen sich grundsätzlich alle anorganischen oder organischen Anionen, insbesondere Halogenid wie beispielsweise Chlorid oder Bromid oder Anionen niedriger Carbonsäuren wie beispielsweise Acetat, Propionat, Succinat, oder Lactat sowie Carbonat oder Methylcarbonat.

Als Amine bzw. quartäre Ammoniumsalze (Ia/Ib) eignen sich vorzugsweise
*N,N*-Bis(3-aminopropyl)-dodecylamin,
*N,N*-Bis(3-aminopropyl)-octylamin,
Didecyldimethylammoniumsalze,
Octyldecyl-ammoniumsalze,
Dioctyl-dimethylammoniumsalze,
Dikokosalkyl-dimethylammoniumsalze,
Kokosalkyl-dimethyl-poly(oxyethyl)ammoniumsalze,
Dikokosalkyl-methyl-poly(oxyethyl)ammoniumsalze,
Decyl-dimethyl-poly(oxyethyl)ammoniumsalze,
Didecyl-methyl-poly(oxyethyl)ammoniumsalze,
Octyl-dimethyl-poly(oxyethyl)ammoniumsalze,
Dioctyl-methyl-poly(oxyethyl)ammoniumsalze,
Kokosalkyl-benzyl-dimethyl-poly(oxyethyl)ammoniumsalze,
Kokosalkyl-benzyl-ethyl-methyl-poly(oxyethyl)ammoniumsalze,
Benzyl-dodecyl-dimethylammoniumsalze oder
Benzyl-dimethyl-poly(oxyethyl)ammoniumsalze oder
beliebige Gemische von mindestens zwei dieser Verbindungen.

Als Sulfite und Dithionite der allgemeinen Formeln IIb-d eignen sich alle löslichen Disulfite (M₂S₂O₅, IIb), Dithionite (M₂S₂O₄, IIc) oder Sulfite (M₂SO₃, IId), worin M ein einwertiges Kation oder ein Äquivalent eines mehrwertigen Kations ist.
Als Kationen M der Sulfite oder Dithionite (II) eignen sich insbesondere alle Alkalimetall-, Erdalkalimetall-, Ammonium-, Kupfer- und Silberionen, vorzugsweise Natrium-, Kalium- und Ammoniumionen.

Es liegt selbstverständlich auch im Rahmen der Erfindung, Gemische der genannten Verbindungen einzusetzen.

Besonders gute Ergebnisse wurden mit Sulfiten (IId) erhalten, insbesondere mit Natriumsulfit.

Das Massenverhältnis von Amin (Ia) bzw. quartärem Ammoniumsalz (Ib) zu den verwendeten Sulfiten oder Dithioniten (IIb-d) liegt vorzugsweise im Bereich von 1:5 bis 5:1.

Bevorzugtes Lösungsmittel der erfindungsgemässen Desinfektions- und Konservierungsmittelzusammensetzungen ist Wasser, gegebenenfalls in Kombination mit einem, vorzugsweise begrenzt oder unbegrenzt mit Wasser mischbaren, organischen Lösungsmittel.

Vorzugsweise enthalten die erfindungsgemässen Desinfektions- und Konservierungsmittelzusammensetzungen noch einen oder mehrere Hilfsstoffe aus der Gruppe bestehend aus organischen Lösungsmitteln, Tensiden, Puffern, Komplexbildnern, Duftstoffen und Farbstoffen.

Ein weiterer Aspekt der Erfindung betrifft die Verwendung von Natriumthiosulfat als Stabilisierungsmittel für die erfindungsgemässen Desinfektions- und Konservierungsmittelzusammensetzungen. Es ist bekannt, dass der pH-Wert von Natriumsulfitlösungen durch Abspaltung u. a.von SO₂ bereits nach kurzer Zeit absinkt. Der weiter oben beschriebene synergistische Effektes von Sulfit auf die fungizide und bakterizide Wirkung von Aminen und Ammoniumsalzen wird durch den Abbau des zugesetzten Sulfits nach einigen Tagen wieder aufgehoben. Weiterhin bewirkt die pH-Absenkung dann einen Wirkungsverlust der verwendeten Amine und Ammoniumsalze. Um den pH der Lösungen dauerhaft stabilisieren zu können und damit eine kommerziell nutzbare Lagerdauer zu erreichen, wurden verschiedene gängige Puffersysteme zugesetzt. Konventionelle Puffersysteme auf Citrat-, Acetat-, Phosphat- oder Ammoniumchloridbasis haben sich dabei als nicht effektiv erwiesen.

Es konnte jedoch überraschend festgestellt werden, dass die Verwendung von Thiosulfat (beispielsweise Natriumthiosulfat, Na₂S₂O₃) gegenüber allen anderen verwendeten Puffern eine ausserordentliche Stabilisierung des pH-Wertes bewirkt. Auch 21 Tage nach Ansetzen der Lösungen konnte keine pH-Absenkung festgestellt werden. Die stabilisierende Wirkung wurde auch nach Zumischung der Amine und Ammoniumsalze bestätigt.
Eine Steigerung der an sich schon sehr guten Pufferwirkung von Natriumthiosulfat konnte in Kombination mit Natriumdihydrogenphosphat (NaH₂PO₄·H₂O) beobachtet werden.

Ein bevorzugtes Anwendungsgebiet der erfindungsgemässen Desinfektions- und Konservierungsmittelzusammensetzungen ist die Flächen- und Instrumentendesinfektion.

Weitere bevorzugte Anwendungsgebiete sind die Wäsche- und Händedesinfektion.

Die erfindungsgemässen Desinfektions- und Konservierungsmittelzusammensetzungen eignen sich auch gut für den Einsatz in chemischen (Behelfs-) Toiletten wie beispielweise an Bord von Flugzeugen und Fahrzeugen oder auf Baustellen.

Ein weiteres bevorzugtes Einsatzgebiet ist die Konservierung von technischen wässrigen Flüssigkeiten wie beispielsweise Wasserkreisläufen bei der Papierherstellung, Kühlwässern, Bandschmiermitteln für Transportbänder oder Kühlschmierstoffen bei der Metallverarbeitung, sogenannten "metal working fluids".

Eine ebenfalls bevorzugte Anwendung ist der Einsatz als Schutz- und Konservierungsmittel für organische und/oder biologisch angreifbare Konstruktionsmaterialien wie beispielsweise Holz.

Die folgenden Beispiele verdeutlichen die Ausführung der Erfindung, ohne dass darin eine Beschränkung auf die beschriebenen Ausführungsfbrmen zu sehen ist. Aufgrund der beanspruchten Variationen der einzelnen Komponenten können noch zahlreiche weitere erfindungsgemässe Beispiele formuliert werden. Diese Beispiele, die durch Veränderung in der Zusammensetzung innerhalb der in der Beschreibung und in den Ansprüchen definierten Variationen gemacht werden, sollen als erfindungsgemässe Beispiele gelten und in den Schutzbereich dieser Patentanmeldung fallen.

Alle Mengenangaben sind, soweit nicht anders angegeben, in Massen-% angegeben. Als Testkeim wurde jeweils *Aspergillus niger* ATCC 16404 eingesetzt. Die Wirksamkeit wurde, soweit nichts anderes angegeben ist, nach dem in CEN 1275 spezifizierten Verfahren bestimmt.

### Beispiel 1

Es wurde eine Desinfektionsreinigerformulierung (Konzentrat) hergestellt aus:

| | |
|---|---|
| 9,0% | Didecyldimethylammoniumchlorid (50%ige Lösung) |
| 6,0% | Genapol UD 080 (C₁₁-Oxoalkohol, 8 mol Ethylenoxid) |
| 6,0% | Butyldiglykol |
| 4,5% | Natriumsulfit (Na₂SO₃) |
| 1,0% | Natriumthiosulfat |
| 0,3% | Natriumdihydrogenphosphat (NaH₂PO₄·H₂O) |
| 73,2% | Wasser |

pH-Wert des Konzentrates: pH 7,9

Die Wirksamkeit wurde mit einer Verdünnung (2 Teile Konzentrat, 98 Teile Wasser) bei 20 °C und 15 min Kontaktzeit bestimmt. Der dekadische Logarithmus der Keimzahlreduktion war 4,2.

### Vergleichsbeispiel 1

Es wurde wie in Beispiel 1 verfahren, jedoch mit dem Unterschied, dass das Natriumsulfit durch die gleiche Menge Wasser ersetzt wurde. Unter den gleichen Testbedingungen war die Formulierung praktisch unwirksam.

### Beispiel 2

Es wurde eine Desinfektionsreinigerformulierung (Konzentrat) hergestellt aus:

| | |
|---|---|
| 9,9% | *N,N-*Bis(3-aminopropyl)dodecylamin |
| 12,0% | Didecyl-methyl-poly(oxyethyl)ammoniumpropionat (BARDAP 26) |
| 20,0% | 1,4-Butandiol |
| 5,0% | Butyldiglykol |
| 4,0% | Natriumsulfit (Na₂SO₃) |
| 1,0% | Natriumthiosulfat |
| 3,0% | Ethylendiamintetraessigsäure |
| 4,0% | Genapol^{®} T 250 (Talgfettalkoholpolyglykolether, 25 mol Ethylenoxid) |
| 2,0% | Glucopon^{®} 215 CSUP (C₈₋₁₀-Fettalkohol-polyglykosid) |
| 39,1% | Wasser |

pH-Wert des Konzentrates: pH 9,7

Die Wirksamkeit wurde mit einer Verdünnung (2 Teile Konzentrat, 98 Teile Wasser) bei 20 °C und 15 min Kontaktzeit bestimmt. Der dekadische Logarithmus der Keimzahlreduktion war 4,2.
Zusätzlich wurde die Wirksamkeit noch nach dem in CEN 1650 spezifizierten Verfahren bei einer Kontaktzeit von 15 min, einer Konzentration von 5,0%, einer Wasserhärte von 30 °fH und einer organischen Belastung von 0,3% Albumin bestimmt. Der Logarithmus der Keimzahlreduktion war >4,6.

### Vergleichsbeispiel 2

Es wurde wie in Beispiel 2 verfahren, jedoch mit dem Unterschied, dass das Natriumsulfit durch die gleiche Menge Wasser ersetzt wurde. Unter den gleichen Testbedingungen war die Formulierung praktisch unwirksam.

### Beispiele 3 bis 18

Es wurden wässrige Lösungen aus 0,5% Sulfit bzw. Dithionit (II) und 0,25% Amin bzw. quartärem Ammoniumsalz (Ia/Ib) hergestellt und nach dem in CEN 1275 spezifizierten Verfahren getestet. Die Ergebnisse sind in Tabelle 1 zusammengefasst.

**Tabelle 1**

| **Beispiel Nr.** | **Amin/Ammoniumsalz** | **Sulfit/Dithionit** | **Ig Keimreduktion** |
|---|---|---|---|
| **1** | Didecyldimethylammoniumchlorid | Natriumsulfit (Na₂SO₃) | 4,2 |
| **V1** | dto. | - | unwirksam |
| **2** | *N,N-*Bis(3-aminopropyl)-dodecylamin und Didecylmethyl-poly(oxyethyl)-ammoniumpropionat (BARDAP^{™} 26) | Na₂SO₃ | 4,2 |
| **V2** | dto. | - | unwirksam |
| **3** | Dimethyl-dioctyl-ammoniumchlorid | Na₂SO₃ | 4,4 |
| **4** | dto. | Natriumdithionit (Na₂S₂O₄) | 4,2 |
| **5*** | dto. | Natriumhydrogensulfit (NaHSO₃) | 3,1 |
| **6** | dto. | Natriumdisulfit (Na₂S₂O₅) | 4,1 |
| **7** | Didecyl-dimethyl-ammoniumchlorid | Na₂SO₃ | 4,2 |
| **8** | dto. | Na₂S₂O₄ | 4,0 |
| **9*** | dto. | NaHSO₃ | 2,7 |
| **10** | dto. | Na₂S₂O₅ | 3,8 |
| **11** | Di-C₈₋₁₀-alkyldimethylammoniumchlorid (60%)/ C₁₂₋₁₆-Alkyl-benzyl-dimethyl-ammoniumchlorid (40%); Bardac^{®} 205-M | Na₂SO₃ | 4,0 |
| **12** | dto. | Na₂S₂O₄ | 3,7 |
| **13*** | dto. | NaHSO₃ | 2,5 |
| **14** | dto. | Na₂S₂O₅ | 3,5 |
| **15** | *N,N* Bis(3-amino-propyl)-dodecylamin | Na₂SO₃ | 4,2 |
| **16** | dto. | Na₂S₂O₄ | 3,8 |
| **17*** | dto. | NaHSO₃ | 2,4 |
| **18** | dto. | Na₂S₂O₅ | 3,9 |

| | | | |
|---|---|---|---|
| (*: nicht erfindungsgemäß) | | | |

Zum Vergleich wurden alle in Tabelle 1 aufgeführten Verbindungen als Einzelsubstanzen in 0,5%iger Lösung getestet. Keine dieser Verbindungen wies eine ausgeprägte fungizide Wirkung auf (lg Keimreduktion <2).

### Beispiel 19

### Stabilisierende Wirkung von Thiosulfat

Zum Nachweis der stabilisierenden Wirkung von Thiosulfat, gegebenenfalls in Kombination mit Dihydrogenphosphat, auf sulfithaltige Lösungen wurden verschiedene Pufferzusammensetzungen hergestellt und innerhalb von ca. 3 Wochen (am 1., 2., 5. und 22. Tag) der pH-Wert bestimmt. Die Resultate sind in der folgenden Tabelle 2 zusammengefasst. Für die Zusammensetzung gemäss Beispiel 1 wurde der pH-Wert nach einem Jahr bestimmt.

**Tabelle 2**

| **Pufferzusammensetzungen** (Wasser jeweils ad 100%) | | **pH-Wert** | | | | |
|---|---|---|---|---|---|---|
| | | **1. Tag** | **2. Tag** | **5. Tag** | **22. Tag** | **1 Jahr** |
| 4,5% | Natriumsulfit (Na₂SO₃) | 10,2 | 9,9 | 9,3 | n. b. | n. b. |
| 4,5% | Na₂SO₃ | 8,0 | 7,9 | 7,7 | n. b. | n. b. |
| 2,0% | Ammoniumchlorid | | | | | |
| 4,5% | Na₂SO₃ | 7,7 | 7,6 | 7,4 | n. b. | n. b. |
| 0,3% | NaH₂PO₄·H₂O | | | | | |
| 4,5% | Na₂SO₃ | 7,6 | 7,6 | 7,6 | 7,6 | n. b. |
| 0,3% | NaH₂PO₄·H₂O | | | | | |
| 1,0% | Natriumthiosulfat | | | | | |
| 9,0% | Didecyldimethylammonium-chlorid (50%ige Lösung) | 7,9 | 7,9 | 7,9 | 7,9 | 7,8 |
| 6,0% | Genapol UD 080 (C₁₁-OXo alkohol, 8 mol Ethylenoxid) | | | | | |
| 6,0% | Butyldiglykol | | | | | |
| 4,5% | Na₂SO₃ | | | | | |
| 1,0% | Natriumthiosulfat | | | | | |
| 0,3% | NaH₂PO₄·H₂O | | | | | |

| | | | | | | |
|---|---|---|---|---|---|---|
| n. b. = nicht bestimmt | | | | | | |

## Patentansprüche

1. Fungizide Desinfektions- und Konservierungsmittelzusammensetzungen, mindestens enthaltend
a) ein Amin und/oder quartäres Ammoniumsalz der allgemeinen Formel 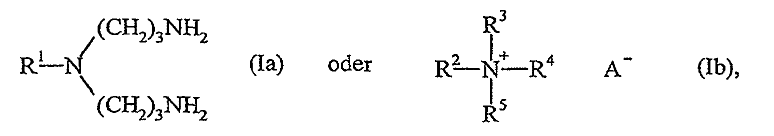 worin
R¹ C₆₋₁₈-Alkyl,
R² Benzyl oder C₆₋₁₈-Alkyl,
R³ C₁₋₁₈-Alkyl oder -[(CH₂)₂-O]*ₙ*-R⁶ mit *n* = 1-20,
R⁴ und R⁵ unabhängig voneinander C₁₋₄-Alkyl,
R⁶ Wasserstoff oder gegebenenfalls substituiertes Phenyl und
A⁻ ein einwertiges Anion oder ein Äquivalent eines mehrwertigen Anions einer anorganischen oder organischen Säure bedeuten, und
b) ein Sulfit oder Dithionit der allgemeinen Formeln M₂S₂O₅ (IIb) und/oder M₂S₂O₄ (IIc) und/oder M₂SO₃ (IId),
worin M ein einwertiges Kation oder ein Äquivalent eines mehrwertigen Kations ist,
im Massenverhältnis I:II von 20:1 bis 1:20.

2. Fungizide Desinfektions- und Konservierungsmittelzusammensetzungen nach Anspruch 1, **dadurch gekennzeichnet, dass** das Amin oder das quartäre Ammoniumsalz der allgemeinen Formel Ia oder Ib ausgewählt ist aus der Gruppe bestehend aus
*N,N*-Bis(3-aminopropyl)dodecylamin,
*N,N*-Bis(3-aminopropyl)octylamin,
Didecyl-dimethylammoniumsalzen,
Dioctyl-dimethylammoniumsalzen,
Octyl-decyl-dimethylammoniumsalzen,
Dikokosalkyl-dimethylammoniumsalzen,
Kokosalkyl-dimethyl-poly(oxyethyl)ammoniumsalzen,
Dikokosalkyl-methyl-poly(oxyethyl)ammoniumsalzen,
Decyl-dimethyl-poly(oxyethyl)ammoniumsalzen,
Didecyl-methyl-poly(oxyethyl)ammoniumsalzen,
Octyl-dimethyl-poly(oxyethyl)ammoniumsalzen,
Dioctyl-methyl-poly(oxyethyl)ammoniumsalzen,
Kokosalkyl-dimethyl-benzyl-ammoniumsalzen,
Kokosalkyl-dimethyl-ethylbenzyl-ammoniumsalzen,
Benzyl-dodecyl-dimethylammoniumsalzen,
Benzyl-dimethyl-poly(oxyethyl)ammoniumsalzen und
Gemischen von mindestens zwei dieser Verbindungen.

3. Fungizide Desinfektions- und Konservierungsmittelzusammensetzungen nach Anspruch 1 oder 2, **dadurch gekennzeichnet, dass** M ein Alkalimetall-, Ammonium-, Kupfer- oder Silberion oder ein Äquivalent eines Erdalkalimetallions ist.

4. Fungizide Desinfektions- und Konservierungsmittelzusammensetzungen nach einem der Ansprüche 1 bis 3, **dadurch gekennzeichnet, dass** das Massenverhältnis von Amin und/oder quartärem Ammoniumsalz zu Sulfit und/oder Dithionit zwischen 1:5 und 5:1 liegt.

5. Fungizide Desinfektions- und Konservierungsmittelzusammensetzungen nach einem der Ansprüche 1 bis 4, **dadurch gekennzeichnet, dass** sie Wasser als Lösungsmittel enthalten.

6. Fungizide Desinfektions- und Konservierungsmittelzusammensetzungen nach einem der Ansprüche 1 bis 5, **dadurch gekennzeichnet, dass** sie zusätzlich einen oder mehrere Hilfsstoffe aus der Gruppe bestehend aus organischen Lösungsmitteln, Tensiden, Puffern, Komplexbildnern, Duftstoffen und Farbstoffen enthalten.

7. Fungizide Desinfektions- und Konservierungsmittelzusammensetzungen nach einem der Ansprüche 1 bis 6, **dadurch gekennzeichnet, dass** sie zusätzlich ein Thiosulfat enthalten.

8. Fungizide Desinfektions- und Konservierungsmittelzusammensetzungen nach Anspruch 7, **dadurch gekennzeichnet, dass** sie zusätzlich ein Alkalidihydrogenphosphat enthalten.

9. Verwendung der fungiziden Desinfektions- und Konservierungsmittelzusammensetzungen gemäss einem der Ansprüche 1 bis 8 zur Flächen- und Instrumentendesinfektion.

10. Verwendung der fungiziden Desinfektions- und Konservierungsmittelzusammensetzungen gemäss einem der Ansprüche 1 bis 8 zur Wäschedesinfektion.

11. Verwendung der fungiziden Desinfektions- und Konservierungsmittelzusammensetzungen gemäss einem der Ansprüche 1 bis 8 zur nicht therapeutischen Händedesinfektion.

12. Verwendung der fungiziden Desinfektions- und Konservierungsmittelzusammensetzungen gemäss einem der Ansprüche 1 bis 8 in chemischen Toiletten.

13. Verwendung der Desinfektions- und Konservierungsmittelzusammensetzungen gemäss einem der Ansprüche 1 bis 8 als Konservierungsmittel für technische Flüssigkeiten.

14. Verwendung der Desinfektions- und Konservierungsmittelzusammensetzungen gemäss einem der Ansprüche 1 bis 8 als Konservierungsmittel für Bandschmiermittel für Transportbänder, Kühlschmiermitteln bei der Metallverarbeitung und/oder anderen "metal working fluids".

15. Verwendung der Desinfektions- und Konservierungsmittelzusammensetzungen gemäss einem der Ansprüche 1 bis 8 als Schutz- und Konservierungsmittel für Konstruktionsmaterialien.

16. Verwendung der Desinfektions- und Konservierungsmittelzusammensetzungen gemäss einem der Ansprüche 1 bis 8 als Schutz- und Konservierungsmittel für Holz.

## Claims

1. Fungicidal compositions of disinfecting and preserving agents, comprising at least
a) one amine and/or quaternary ammonium salts of the general formula 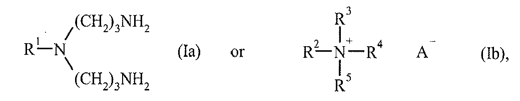 wherein
R¹ is C₆₋₁₈ alkyl,
R² is benzyl or C₆₋₁₈ alkyl,
R³ is C₁₋₁₈ alkyl or-[(CH₂)₂-O]*ₙ*-R⁶ with n = 1-20,
R⁴ and R⁵ are independently of each other C₁₋₄ alkyl,
R⁶ is hydrogen or optionally substituted phenyl and
A⁻ is a monovalent anion or an equivalent of a polyvalent anion or an organic or inorganic acid, and
b) a sulfite oder dithionite of the general formulae M₂S₂O₅ (IIb) and/or M₂S₂O₄ (IIc) and/or M₂SO₃ (IId),
wherein M is a monovalent kation or an equivalent of a polyvalent kation,
in the mass ratio (I):(II) of 20:1 to 1:20.

2. Fungicidal compositions of disinfecting and preserving agents of claim 1, **characterized in that** the amine or the quaternary ammonium salt of the general formula Ia or Ib is selected from the group consisting of
*N,N*-bis(3-aminopropyl) dodecylamine,
*N,N*-bis(3-aminopropyl) octylamine,
didecyldimethyl ammonium salts,
dioctyldimethyl ammonium salts,
octyldecyldimethyl ammonium salts,
dicocoalkyldimethyl ammonium salts,
cocoalkyldimethyl poly(oxyethyl) ammonium salts,
dicocoalkylmethyl poly(oxyethyl) ammonium salts,
decyldimethyl poly(oxyethyl) ammonium salts,
didecylmethyl poly(oxyethyl) ammonium salts,
octyldimethyl poly(oxyethyl) ammonium salts,
dioctylmethyl poly(oxyethyl) ammonium salts,
cocoalkyl benzyl dimethyl ammonium salts,
cocoalkyldimethyl ethylbenzyl ammonium salts,
benzyldodecyldimethyl ammonium salts,
benzyldimethyl poly(oxyethyl) ammonium salts and
mixtures of at least two of that compounds.

3. Fungicidal compositions of disinfecting and preserving agents of claim 1 or 2, **characterized in that** M is an ion of an alkaline metal, ammonium, copper, silver or is an equivalent of an earth alkaline metal ion.

4. Fungicidal compositions of disinfecting and preserving agents of one of the claims 1 to 3 **characterized in that** the weight ratio of the amine and/or quaternary ammonium salts to the sulfite and/or dithionite is between 1:5 to 5:1.

5. Fungicidal compositions of disinfecting and preserving agents of one of the claims 1 to 4 **characterized in that** they contain water as solvent.

6. Fungicidal compositions of disinfecting and preserving agents of one of the claims 1 to 5 **characterized in that** they additionally contain one or more additives selected from the group consisting of organic solvents, surfactants, buffers, complexing agents, fragrances and colorants.

7. Fungicidal compositions of disinfecting and preserving agents of one of the claims 1 to 6, **characterized in that** they additionally contain a thiosulfate.

8. Fungicidal compositions of disinfecting and preserving agents of one of the claims 1 to 7, **characterized in that** they additionally contain an alkaline metal hydrogen phosphate.

9. Use of fungicidal compositions of disinfecting and preserving agents of one of the claims 1 to 8 for surfaces disinfection and instruments disinfection.

10. Use of fungicidal compositions of disinfecting and preserving agents of one of the claims 1 to 8 for laundry disinfection.

11. Use of fungicidal compositions of disinfecting and preserving agents of one of the claims 1 to 8 for non-therapeutic hand disinfection.

12. Use of fungicidal compositions of disinfecting and preserving agents of one of the claims 1 to 8 in chemical toilets.

13. Use of fungicidal compositions of disinfecting and preserving agents of one of the claims I to 8 as preserving agent for industrial liquids.

14. Use of fungicidal compositions of disinfecting and preserving agents of one of the claims 1 to 8 as preserving agents for lubricant for conveyor belts, as cooling lubricant for metal machining and/or in other "metal working fluids".

15. Use of fungicidal compositions of disinfecting and preserving agents of one of the claims 1 to 8 as protective and preserving agents for construction materials.

16. Use of fungicidal compositions of disinfecting and preserving agents of one of the claims I to 8 as protective and preserving agents for wood.

## Revendications

1. Compositions d'agents désinfectants et conservateurs fongicides, comprenant au moins
a) une amine et/ou un sel d'ammonium quaternaire de formule générale 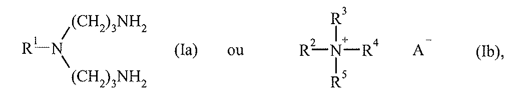 dans laquelle
R¹ est un groupe alkyle en C₆ à C₁₈,
R² est un groupe benzyle ou est un groupe alkyle en C₆ à C₁₈,
R³ est un groupe alkyle en C₁ à C₁₈ ou -[(CH₂)₂-O]ₙ-R⁶ avec *n* = 1-20,
R⁴ et R⁵ représentent, indépendamment, un groupe alkyle en C₁ à C₄,
R⁶ est un hydrogène ou un groupe phényle éventuellement substitué, et
A⁻ est un anion monovalent ou un anion polyvalent d'un acide inorganique ou organique, et
b) un sulfite ou dithionite de la formule générale M₂S₂O₅ (IIb) et/ou M₂S₂O₄ (IIc) et/ou M₂SO₃ (IId),
dans laquelle M et un cation monovalent ou un équivalent d'un cation polyvalent,
dans un rapport massique (I):(II) de 20:1 à 1:20.

2. Compositions d'agents désinfectants et conservateurs fongicides selon la revendication 1, **caractérisée en ce que** ledit amine ou ledit sel d'ammonium quaternaire de formule générale Ia ou Ib est choisi dans le groupe constitué par
*N,N* bis(3-aminopropyl)dodécylamine,
*N,N*-bis(3-aminopropyl)octylamine,
un sel d'ammonium didécyldiméthyl,
un sel d'ammonium dioctyl-diméthyl,
un sel d'ammonium octyl-décyl-diméthyl,
un sel d'ammonium dicocoalkyle-diméthyl,
un sel d'ammonium cocoalkyldiméthyl-poly(oxyéthyl),
un sel d'ammonium dicocoalkylméthyl-poly(oxyéthyl),
un sel d'ammonium décyl-diméthyl-poly(oxyéthyl),
un sel d'ammonium didécyl-méthyl-poly(oxyéthyl),
un sel d'ammonium octyl-diméthyl-poly(oxyéthyl),
un sel d'ammonium dioctyl-méthyl-poly(oxyéthyl),
un sel d'ammonium cocoalkyl-diméthyl-benzyl,
un sel d'ammonium cocoalkyl-diméthyl-éthylbenzyl,
un sel d'ammonium benzyl-dodécyl-diméthyl,
un sel d'ammonium benzyl-diméthyl-poly(oxyéthyl) ainsi
que les mélanges de ces composés.

3. Compositions d'agents désinfectants et conservateurs fongicides selon la revendication 1 ou 2, **caractérisée en ce que** M est un ion d'un métal alcalin, d'ammonium, de cobre ou d'argent ou est un équivalent d'un ion alcalino-terreux.

4. Compositions d'agents désinfectants et conservateurs fongicides selon l'une quelconque des revendications 1 à 3, **caractérisée en ce que** le rapport massique d'amine et/ou de sel d'ammonium quaternaire à sulfite et/ou dithionite est situé entre 1 :5 à 5 :1.

5. Compositions d'agents désinfectants et conservateurs fongicides selon l'une quelconque des revendications 1 à 4, **caractérisée qu'**elle contient de l'eau comme solvant.

6. Compositions d'agents désinfectants et conservateurs fongicides selon l'une quelconque des revendications 1 à 5, **caractérisée en ce qu'**elle contient entre autres un ou plusieurs adjuvants du groupe constitué par les solvants organique, les agents tensioactifs, les buffers, les agents complexants, les parfums et les colorants.

7. Compositions d'agents désinfectants et conservateurs fongicides selon l'une quelconque des revendications 1 à 6, **caractérisée qu'**elle contient additionnellement d'un thiosulfate.

8. Compositions d'agents désinfectants et conservateurs fongicides selon l'une quelconque des revendications 1 à 7, **caractérisée qu'**elle contient additionnellement d'un alcali dihydrogenphosphate.

9. Utilisation des compositions d'agents désinfectants et conservateurs fongicides selon une ou plusieurs des revendications 1 à 8 pour la désinfection des surfaces ou des instruments.

10. Utilisation des compositions d'agents désinfectants et conservateurs fongicides selon une ou plusieurs des revendications 1 à 8 pour la désinfection du linge.

11. Utilisation des compositions d'agents désinfectants et conservateurs fongicides selon une ou plusieurs des revendications 1 à 8 pour la désinfection non-thérapeutique des mains.

12. Utilisation des compositions d'agents désinfectants et conservateurs fongicides selon une ou plusieurs des revendications 1 à 8 dans les w.c. chimiques.

13. Utilisation des compositions d'agents désinfectants et conservateurs fongicides selon une ou plusieurs des revendications 1 à 8 comme conservateur des liquides techniques.

14. Utilisation des compositions d'agents désinfectants et conservateurs fongicides selon une ou plusieurs des revendications 1 à 8 comme conservateur pour les lubrifiants, pour les bandes transporteuses, les fluides caloporteurs dans la métallurgie et/ou d'autres "metal working fluids".

15. Utilisation des compositions d'agents désinfectants et conservateurs fongicides selon une ou plusieurs des revendications 1 à 8 comme agent de protection et conservateur pour les matériaux de construction.

16. Utilisation des compositions d'agents désinfectants et conservateurs fongicides selon une ou plusieurs des revendications 1 à 8 comme agent de protection et conservateur pour le bois.
